(19) Europäisches Patentamt
European Patent Office
Office européen des brevets

(11) Publication number: **0 044 540**
**B1**

(12) **EUROPEAN PATENT SPECIFICATION**

(45) Date of publication of patent specification: **22.05.85**

(21) Application number: **81105625.8**

(22) Date of filing: **17.07.81**

(51) Int. Cl.[4]: **C 08 L 83/04,** C 08 L 71/02, D 06 M 15/643

(54) **Silicone polymer compositions for treating textile materials, processes for preparing the same, a process for treating textile materials and the coated textile material thus treated.**

(30) Priority: **18.07.80 US 170298**

(43) Date of publication of application: **27.01.82 Bulletin 82/04**

(45) Publication of the grant of the patent: **22.05.85 Bulletin 85/21**

(84) Designated Contracting States: **BE CH DE FR GB IT LI NL SE**

(56) References cited:
**EP-A-0 026 366**
**DE-A-3 009 936**

(73) Proprietor: **SWS Silicones Corporation**
**Adrian/Michigan 49221 (US)**

(72) Inventor: **Martin, Eugene Ray**
**8023 Springville Highway**
**Onsted Michigan 49265 (US)**

(74) Representative: **Wagner, Helga, Dr.**
**c/o Wacker-Chemie GmbH Prinzregentenstrasse 22**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 044 540 B1

**Description**

The present invention relates to silicone polymers, particularly to a composition obtained from silylated polyethers and silanol terminated polysiloxanes and more particularly to a process for coating textile materials with the silicone polymers.

Heretofore textile materials have been treated with compositions containing a hydroxyl terminated organopolysiloxane, a crosslinking agent and a catalyst to impart a soft, silky, durable hand heretofore. (See U.S. Patent No. 3,876,459 and No. 3,770,489). Although treatment with these organopolysiloxanes has been very effective for the intended purpose, it requires that each of the constituents be emulsified and then stored separately. Furthermore, once the emulsions of each of the constituents have been mixed, the resultant mixture has a limited pot life. Likewise, siloxane emulsions have a tendency to separate when they are being applied to textiles, thereby resulting in a non-uniform coating. When these coated textile materials are then subjected to further treatment, such as dyeing or printing, the uneven distribution of organopolysiloxane on the surface of the textile materials interferes with the print and dye quality of the material.

Therefore, one of the advantages of this invention is that silicone polymers can be dispersed in water to form stable emulsions or solutions. Separate emulsions consisting of a crosslinker and a catalyst are not required to effect curing of the compositions of this invention. Moreover, the compositions of this invention provide a finish for textile substrates that do not have a limited stability.

Therefore, it is an object of this invention to provide a composition containing silicone polymers. Another object of this invention is to provide a composition containing silicone polymers which may be applied to textile materials to impart a soft, silky hand thereto. Still another object of this invention is to provide a composition containing silylated polyethers and silanol terminated organopolysiloxanes. A further object of this invention is to provide a composition which is obtained from the reaction of silylated polyethers and silanol terminated organopolysiloxanes. A still further object of this invention is to provide a stable emulsion which does not require additives for effecting treatment of textile materials.

The foregoing objects and others which will become apparent from the following description are accomplished in accordance with this invention generally speaking by providing a composition containing silylated polyethers and silanol terminated organopolysiloxanes. The resultant composition may be combined with water to form dispersions which may be used to treat textile substrates to impart a soft, silky and durable hand thereto.

The silylated polyethers which are mixed with the silanol terminated organopolysiloxanes may be represented by the formula

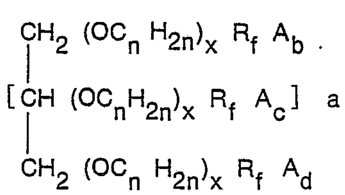

wherein at least one R is selected from the group consisting of an —NH radical, an ammonium radical or a radical of the formula

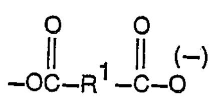 , 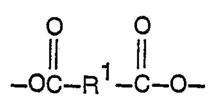 , or 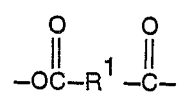 ,

in which the radicals represented by R are linked to the polyether through an ester, amine, amide or ammonium radical and the remaining R groups are selected from hydrocarbonoxy radicals having up to 18 carbon atoms, hydroxyl radicals or a radical of the formula

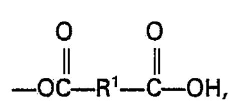

$R^1$ is a divalent hydrocarbon radical having from 1 to 10 carbon atoms selected from the group consisting of $-(CH_2)_y-$, —CH=CH—, a cyclic divalent hydrocarbon radical selected from the group consisting of $C_6H_4$, $C_6H_8$, $C_6H_{10}$ and $C_{10}H_6$, in which the $R^1$s may be the same or different; A which may be the same or different is a silicon containing radical selected from the group consisting of cationic or anionic radicals of the formula

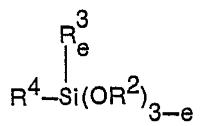 , 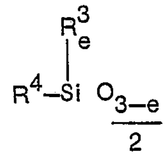

and nonionic radicals of the formula

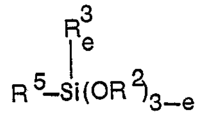 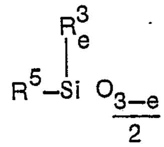 ,

wherein $R^2$ and $R^3$ which may be the same or different, are monovalent hydrocarbon radicals having from 1 to 18 carbon atoms, $R^4$ is an ionic radical linked to a silicon atom consisting of hydrogen, carbon, oxygen and nitrogen atoms selected from the formulas

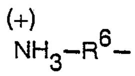 , 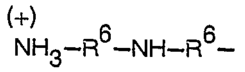 , 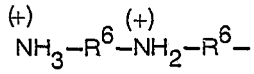 , 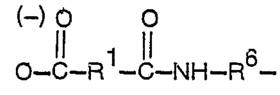 ,

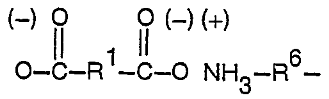 , 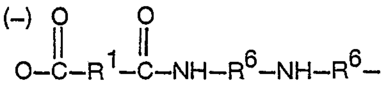 and

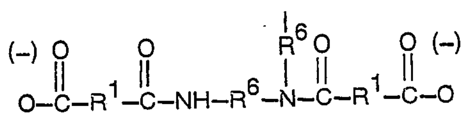

$R^5$ is a nonionic divalent radical represented by $R^6$ or radicals consisting of carbon, hydrogen, oxygen and nitrogen atoms selected from the formulas

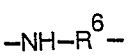 , 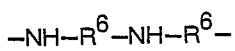 , 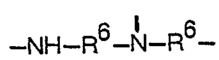 , 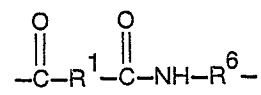 ,

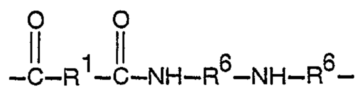 and 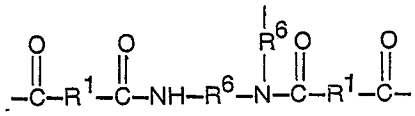

with the proviso that when R is the radical

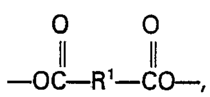

then $R^5$ must be $R^6$,

$R^6$ which may be the same or different is a radical having from 1 to 50 carbon atoms selected from the group consisting of a saturated divalent hydrocarbon radical, a divalent hydrocarbonoxy radical in which the oxygen is in the form of an ether linkage and an unsaturated divalent hydrocarbon radical in which the unsatisfied valences of the $R^6$ radical are linked to a silicon atom. The unsatisfied valences or charges of A are satisfied by R and when A is a divalent radical and contains a dication or dianion, the ratio of A to R is 1:2 and when R is a cation, then A must be an anion, and when R is an anion, then A must be a cation and when R is a nonionic radical, then A must be a nonionic radical, a is a number of from 0 to 4; b, c and d are each 0 or 1, the sum of b, c and d must be at least 1, and when b, c or d are 0, then R must be a hydroxyl or hydrocarbonoxy radical or a radical of the formula

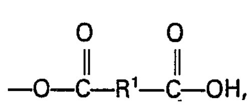

e is a number of from 0 to 2, f which may be the same or different is 0 or 1, and when f is 0, then $R^5$ is a divalent hydrocarbonoxy radical linked to the silicon atom through a carbon-carbon bond, n is 2, 3 or 4, x is a number of at least 1 and up to 600, preferably from 10 to 250 and y is a number of from 0 to 10.

Suitable examples of silicon containing radicals represented by A above are

$\overset{(+)}{N}H_3C_3H_6Si(OCH_3)_3$, $\overset{(+)}{N}H_3C_4H_8Si(OC_2H_5)_3$, $\overset{(+)}{N}H_3C_2H_4\ \overset{(+)}{N}H_2C_3H_6Si(OCH_3)_3$

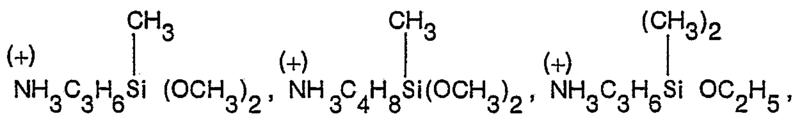

$\overset{(+)}{N}H_3C_6H_4Si(OCH_3)_3$, $\overset{(+)}{N}H_3C_2H_4OC_3H_6Si(OCH_3)_3$, $\overset{(+)}{N}H_3C_3H_6Si\ O_{1.5}$,

$\overset{(+)}{N}H_3C_2H_4\ \overset{(+)}{N}H_2C_3H_6SiO_{1.5}$, 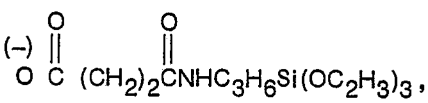

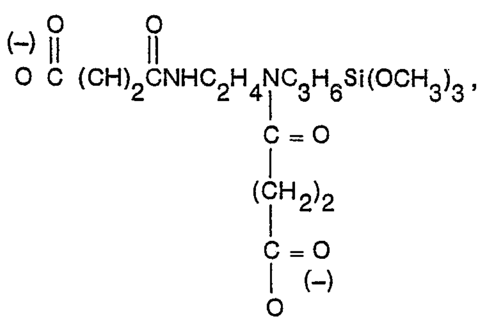 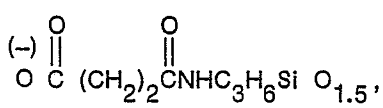

$-NHC_3H_6Si(OCH_3)_3$, 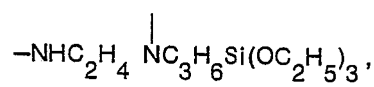 $-C_3H_6Si(OCH_3)_3$

$-NHC_3H_6SiO_{1.5}$ and $-NHC_2H_4NHC_3H_6Si(OCH_3)_3$.

The unsatisfied valences of the silicon atoms in the above formulas are satisfied by silicon-oxygen-silicon linkages.

Suitable examples of hydrocarbonoxy radicals represented by R having from 1 to 18 carbon atoms are methoxy, ethoxy, propoxy, butoxy, octoxy, dodecoxy and octadecoxy radicals. Examples of suitable radicals represented by $R^1$ are divalent hydrocarbon radicals having from 1 to 10 carbon atoms such as methylene, ethylene, trimethylene, tetramethylene, pentamethylene, hexamethylene, octamethylene and decamethylene radicals. Examples of divalent cyclic radicals represented by $R^1$ are phenylene, naphthenylene, cyclohexylene and cyclohexenylene radicals.

Suitable examples of monovalent hydrocarbon radicals represented by $R^2$ and $R^3$ are alkyl radicals, e.g., methyl, ethyl, propyl, butyl, hexyl, octyl, decyl, dodecyl and octadecyl radicals; aryl radicals, e.g., the phenyl radical; alkaryl radicals, e.g., tolyl, xylyl and ethylphenyl radicals; cycloalkyl radicals, e.g., cyclobutyl, cyclohexyl, cyclodecyl radicals; aralkyl radicals, e.g., benzyl, 2-phenylethyl and 2-phenylpropyl radicals.

Examples of preferred divalent hydrocarbon radicals represented by $R^5$ are radicals having up to 50 carbon atoms, of the formula

$$—O—(C_nH_{2n}O)_m(CH_2)_z$$

where m is from 0 to 24, n is 2, 3 or 4 and z is a number of from 1 to 10.

Examples of suitable divalent radicals represented by $R^6$ are hydrocarbon radicals having preferably up to 10 carbon atoms such as ethylene, trimethylene, hexamethylene and octamethylene radicals and hydrocarbonoxy containing radicals having up to 50 carbon atoms of the formula

$$(C_2H_4O)_r(CH_2)_z,\ (C_3H_6O)_r(CH_2)_z \text{ and } (C_4H_8O)_r(CH_2)_z$$

where r is from 1 to 24, and z is the same as above. Specific examples of hydrocarbonoxy containing radicals are ethylene oxide, trimethylene oxide, tetramethylene oxide and alkenylene radicals having preferably up to 10 carbon atoms such as vinylene, propenylene, butenylene and hexenylene.

The silylated polyethers of this invention may be prepared by several different techniques. Some of the techniques for preparing these silylated polyethers are described in EP 0026366 A 1. (Priority: 9-10-79, US 74 188).

One method for preparing the silylated polyethers is to react oxyalkylene glycols or copolymers thereof with a cyclic anhydride at a temperature of from 80° to 185°C to form a half ester which is then reacted with an aminofunctional silane having at least 1 and up to 3 alkoxy groups per silicon atom at from 0° to 110°C.

Another method for preparing the silylated polyethers is to react an aminofunctional silane with a cyclic anhydride at a temperature of from 25° to 110°C thus forming a carboxylic acid functional silane, and thereafter reacting the resultant silane with an amine terminated oxyalkylene polymer or copolymers thereof at a temperature of from 0° to 110°C.

According to this second method preferably such silylated polyethers wherein R is an ammonium ion and A is a group of the formula

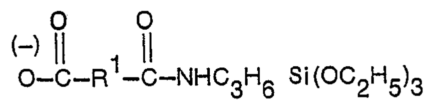

or of the formula

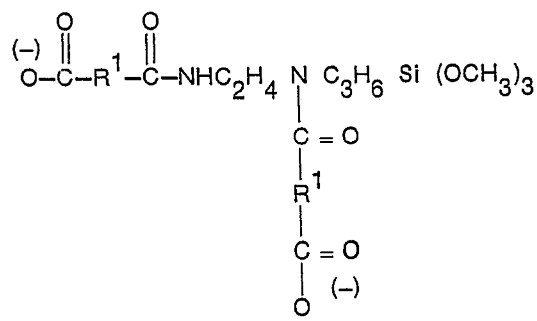

can be prepared.

In the methods described above, if the reactants are heated up to about 115°C, the resultant product is an ammonium salt. When an amido linkage is desired, then the reactants are heated at temperatures above 115°C.

Still another method for preparing the silylated polyethers is to react an amine terminated oxyalkylene polymer or copolymers thereof with a cyclic anhydride to form a carboxylic acid functional polymer which is then reacted with an aminofunctional silane at a temperature of from 0° to 100°C.

The silylated polyethers employed in this invention may be prepared by reacting an oxyalkylene glycol or copolymers thereof with a cyclic anhydride and thereafter reacting the resultant carboxylic acid polymer with a haloalkylalkoxysilane in the presence of triethylamine at a temperature of from 80° to 150°C.

The silylated polyethers may also be prepared by reacting an amine terminated oxyalkylene polymer or copolymers thereof with a haloalkylalkoxysilane and thereafter reacting the resultant product with a sodium alkoxide at a temperature of from about 80° to 150°C.

The silylated polyethers used in the compositions of this invention may also be prepared by substituting dicarboxylic acids having up to 10 carbon atoms for the anhydrides described above.

When dicarboxylic acids are used, it may be advantageous to employ esterification catalysts such as titanates, alkali metal hydroxides or mineral acids.

Suitable examples of dicarboxylic acids which may be used are oxalic acid, malonic acid, succinic acid, glutaric acid, adipic acid, pimelic acid, suberic acid, azelaic acid and sebacic acid.

The oxyalkylene glycols and copolymers thereof which are used to make the silylated polyethers which are employed in the compositions of this invention are well known in the art. These glycols and coplymers thereof may be illustrated by the following formula:

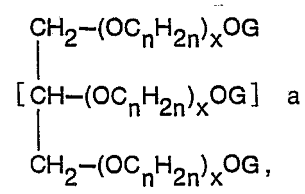

where G is hydrogen or an alkyl radical having from 1 to 18 carbon atoms, in which at least one G must be hydrogen, a is a number of from 0 to 4, n is 2, 3 or 4, x is a number of at least 1 and up to 600, preferably from 10 to 250. Generally, these glycols are made by the homopolymerization or copolymerization of ethylene oxide, propylene oxide and/or butylene oxide using various alcohols as initiators. Examples of alcohols are glycerine, methanol, ethylene glycol, ethanol and t-butanol.

Suitable examples of anhydrides that may be used to make the silylated polyethers which are employed in compositions of this invention are succinic anhydride, glutaconic anhydride, maleic anhydride, 1,2-cyclohexanedicarboxylic anhydride, 1-cyclohexene-1,2-dicarboxylic anhydride, 3-cyclohexene-1,2-dicarboxylic anhydride, 4-cyclohexene-1,2-dicarboxylic anhydride, 1,8-naphthalic anhydride and phthalic anhydride.

Suitable examples of aminofunctional silanes which may be used to prepare the silylated polyethers which are employed in the compositions of this invention are beta-aminopropyltriethoxysilane, gamma-aminopropyltrimethoxysilane, methyl-beta-(aminoethyl)-gamma-aminopropyldimethoxysilane, omega-aminohexyltributoxysilane, beta-(aminoethoxy)propyltrimethoxysilane, beta-(aminoethoxy)hexyltriethoxysilane, beta-(aminopropoxy)butyltributoxysilane,

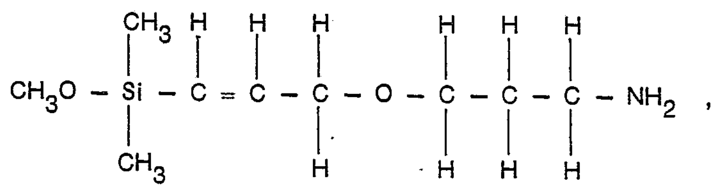

and

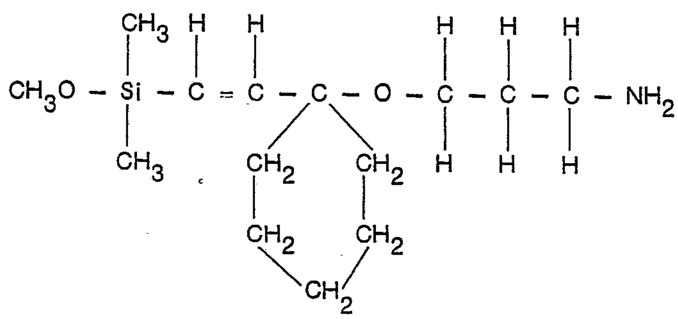

Examples of amine terminated oxyalkylene homopolymers and copolymers which may be used to prepare the silylated polyethers which are employed in the compositions of this invention are those having the general formula

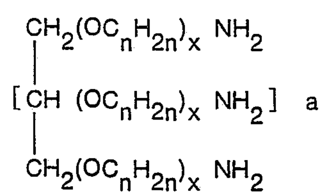

wherein a, n and x are the same as above. These polymers can be synthesized by effecting the amination of the corresponding oxyalkylene homopolymer or copolymer having terminal haloalkyl groups. These haloalkyl terminated polymers may be prepared by reacting oxyalkylene glycol or copolymers thereof with a phosphorous trihalide.

The haloalkyl silanes that may be used in the preparation of the silylated polyethers may be represented by the formula

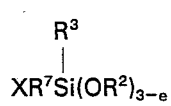

wherein $R^2$, $R^3$ and e are the same as above, $R^7$ is a divalent hydrocarbon radical having from 1 to 18 carbon atoms, and X is a halogen such as chlorine, bromine and iodine.

Suitable examples of divalent hydrocarbon radicals represented by $R^7$ are ethylene, trimethylene, tetramethylene, hexamethylene, octamethylene, dodecamethylene, hexadecamethylene and octadecamethylene radicals.

More specifically, suitable examples of haloalkylsilanes that may be used are chloropropyltrimethoxysilane, chloropropylmethyldimethoxysilane, chloropropyldimethylethoxysilane, bromopropyltriethoxysilane, iodobutylmethyldimethoxysilane and bromobutylethyldimethoxysilane.

In the above reactions, the mole ratio of anhydride to amine or hydroxyl groups linked to the polyether or silane may be varied over a wide range. For example, the mole ratio of anhydride to amine or hydroxyl group may range from 0.17:1 to 1.25:1 with the preferred ratio of anhydride to amine or hydroxyl groups being from 0.33:1 to 1.1:1, with the proviso that at least one amine or hydroxyl group per molecule is reacted with the anhydride.

In the subsequent silylation of the polyethers, the mole ratio of the carboxylic acid radical formed from the reaction of the cyclic anhydride with the above amine or hydroxyl groups, to the haloalkyl radicals linked to the silane or the amine groups linked to the silane or polyether may range from 0.17:1 to 1.25:1 with the proviso that at least one carboxylic acid radical per molecule is present for each amine group in order that an ammonium salt or the corresponding amide or the ester is formed.

Branched or linear silanol terminated organopolysiloxanes having structural units of the formula

$$\begin{matrix} R^3_{4-w} \\ | \\ SiO_{\frac{w}{2}} \end{matrix}$$

are mixed with the silylated polyethers to form the silicone polymer compositions of this invention, in which $R^3$ is a monovalent hydrocarbon radical having from 1 to 18 carbon atoms and w is 2, 3 or 4. All unsatisfied valences of the silicon atoms are satisfied through Si—O—Si linkages or hydroxyl groups. Preferably the organopolysiloxanes have a viscosity of from 15 to 1,000,000 $mm^2/s$ (cs.) at 25°C and more preferably from 25 to 500,000 $mm^2/s$ (cs.) at 25°C. Emulsions of the silanol terminated organopolysiloxanes may also be used.

Suitable examples of monovalent hydrocarbon radicals are alkyl radicals such as methyl, ethyl, propyl, butyl, hexyl, decyl, dodecyl and octadecyl radicals; cycloalkyl radicals such as cyclohexyl, cyclobutyl, cyclodecyl radicals; aryl radicals such as the phenyl radical; aralkyl radicals such as benzyl, 2-phenylethyl, and the 2-phenylpropyl radical and alkaryl radicals such as tolyl, xylyl and ethylphenyl radicals. The compositions of this invention may be prepared by mixing the silylated polyether with the silanol terminated organopolysiloxane in the absence of or presence of certain diluents, such as solvents and emulsifiers, preferably at an elevated temperature, e.g. up to about 90°C and above. Examples of suitable solvents include water, hydrocarbon solvents such as heptane or di-n-butylether, aromatic hydrocarbons, or chlorinated hydrocarbons. Examples of suitable emulsifiers include non-ionic emulsifiers such as nonylphenol ethylene oxide adducts, polyoxyethylene stearates, etc; anionic emulsifiers such as sodium lauryl sulfate, sodium stearate, etc; cationic emulsifiers such as quaternary chlorides, etc., or amphoteric emulsifiers such as aminoacids, etc.

The preferred method for preparing the compositions containing silicone polymers is to mix the silylated polyether and the silanol terminated polysiloxane in the absence of a diluent at a temperature of from 25° to 70°C. The resultant composition can then be mixed with diluents in an amount of from 0.25 to 99.75 parts of the composition containing silicone polymers with from 99.75 to 0.25 part of diluent and more specifically, from 0.5 to 50 parts of the composition containing silicone polymers with from 99.5 to 50 parts of diluent.

Dispersions can be made by vigorously mixing water as a diluent with the composition containing silicone polymers for about 1 hour at room temperature.

The silicone polymer compositions of this invention include mixtures of silylated polyethers and silanol terminated polysiloxanes, reaction products of silylated polyethers and silanol terminated polysiloxanes and various mixtures of the above. These polymers may be prepared by employing an excess of either the silyated polyether or the silanol terminated polysiloxane. The amount of silylated polyether present in the compositions of this invention may range from about 0.25 to 99.75 percent by weight and the amount of silanol terminated organopolysiloxane may range from about 99.75 to 0.25 percent by weight based on the weight of silylated polyether and silanol terminated organopolysiloxane. Preferably, the weight ratio of silylated polyether to silanol terminated organopolysiloxane may range from 1 to 99 percent to 99 to 1 percent by weight and more preferably in a weight ratio of from 95 to 50 percent to 5 to 50 percent of silylated polyether to silanol terminated organopolysiloxane based on the combined weight of the silylated polyether and silanol terminated organopolysiloxane.

The compositions of this invention containing silylated polyethers and silanol terminated organopolysiloxanes can be applied to textile materials in admixture with other substances which have been used heretofore to impart certain properties to textile materials. Other substances which may be used in combination with the compositions of this invention are lubricating agents, agents which improve abrasion resistance of the treated fibers, materials which improve the fragrance of the treated materials, antistatic lubricants, fabric softeners, fire retardants, soil resistant materials and crease-proofing agents. Examples of crease-proofing agents are aminoplast resins such as urea-formaldehyde resins, malamine-formaldehyde resins, and dimethylol dihydroxy ethylene urea which may contain magnesium chloride and zinc nitrate as catalysts. In certain applications the amount of crease-proofing agent may be reduced when using the compositions of this invention without sacrificing crease-proofing properties. Other crease-proofing resins are phenol-formaldehyde resins and hydroxyethyl methacrylate resins.

The compositions of this invention may be applied in concentrated form or preferably dispersed in water or in organic solvents such as di-n-butylether, aliphatic hydrocarbons, aromatic hydrocarbons, and/or chlorinated hydrocarbons and then applied.

The stability of water dispersions of the compositions of this invention may also be enhanced by the addition of certain emulsifiers. Examples of such stabilizing agents include non-ionic emulsifiers such as nonylphenol ethylene oxide adducts, polyoxyethylene stearates, etc.; anionic emulsifiers such as sodium lauryl sulfate, sodium stearate, etc.; cationic emulsifiers such as quaternary ammonium chlorides, etc.; or amphoteric emulsifiers such as amino acids, etc.

The compositions of this invention, and if desired other substances, may be applied to all textile materials, preferably organic textile materials on which organopolysiloxanes have been or could have been applied heretofore. Examples of such textile materials are wool, cotton, rayon, hemp, natural silk, polypropylene, polyethylene, polyester, polyurethane, polyamide, cellulose acetate, polyacrylonitrile fibers, and mixtures of such fibers. The textile materials may consist of staple or monofilament fibers.

The compositions of this invention and other substances, if desired, may be applied to the textile materials by any means known in the art, such as by spraying, immersion, foaming, padding, calendering or by gliding the fibers across a base which has been saturated with the compositions of this invention.

Generally, the solids add-on is in the range of from 0.025 to 20 percent and preferably from about 0.04 to 10 percent, based on the weight of the original textile material.

After the textile material has been treated, it is dried at an elevated temperature, e.g., from about 50 to 200°C for a brief period of time, e.g., from about 3 to 15 minutes.

The treated textile material should contain from about 0.025 to about 10 percent by weight on a dry basis of the cured composition of this invention.

Textile materials treated with the compositions of this invention possess beneficial properties such as a soft, durable hand and either hydrophobic or hydrophilic characteristics depending on the type of silicone polymer employed.

Specific embodiments of this invention are further illustrated in the following examples in which all parts are by weight unless otherwise specified.

## Example 1

(a) A carboxylic acid functional polymer is prepared by mixing about 2.000 parts (0.35 mole) of an oxyethyleneoxypropylene triol copolymer having a mole ratio of oxyethylene units to oxypropylene units of about 2.5 to 1 and a molecular weight of about 5,660 with about 106.1 parts (1.06 moles) of succinic anhydride and the resultant mixture is heated at about 175°C for eighteen hours. The resultant product has a viscosity of 4,168 $mm^2/s$ (cs.) at 25°C. Nuclear Magnetic Resonance analysis shows a mole ratio of the functional groups as follows:

| Functional Group | Mole Ratio |
|---|---|
| $C_3H_6O$ | 1.0 |
| $C_2H_4O$ | 2.45 |

The acid content is found to be about 0.58 milliequivalent of acid per gram while the theoretical value is 0.5 milliequivalent per gram. The product is represented by the formula

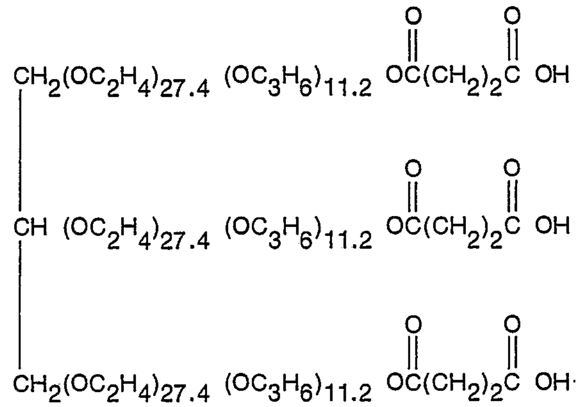

(b) About 900 parts of the above product are mixed with about 90.1 parts of aminopropyltriethoxysilane for about 1 hour. A slight exotherm is observed. The resultant silylated polyether, which is a dark straw colored liquid and has a viscosity of about 24,460 $mm^2/s$ (cs.) at 25°C, may be represented by the formula

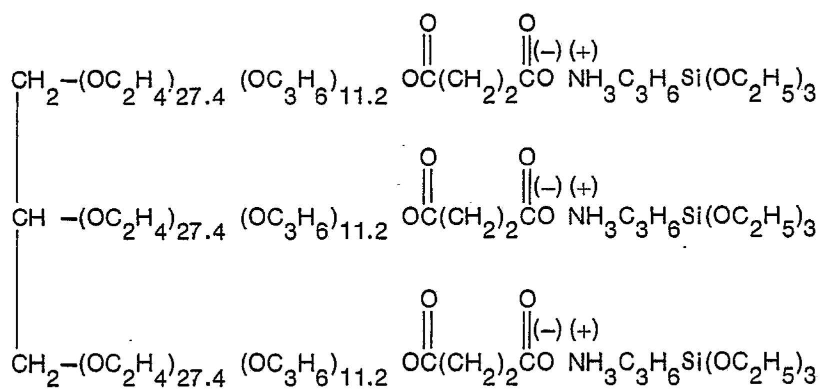

c) About 270 parts of the silylated polyether prepared in b) above, are mixed with 30 parts of a linear silanol terminated dimethylpolysiloxane having a silanol content of about 2.5 percent and a viscosity of about 70 $mm^2/s$ (cs.) at 25°C at a temperature of 70°C for 3 hours. The resultant product is an opaque, yellow liquid, with a viscosity of about 77,340 $mm^2/s$ (cs.) at 25°C.

Example 2

One hundred parts of the composition prepared in Example 1(c) are dispersed in 200 parts of water by mixing at room temperature for one hour. The dispersion is an opaque, yellow, homogenous liquid with a viscosity of 57.5 $mm^2/s$ (cs.) at 25°C. A rubber-like film is formed upon evaporation of the water.

Example 3

About 200 parts of the silylated polyether prepared in Example 1(b) above are mixed with 100 parts of a silanol terminated dimethylpolysiloxane, having a silanol content of about 2.5 percent and a viscosity of about 70 $mm^2/s$ (cs.) at 25°C, at a temperature of 25°C for 3 hours. The resultant composition is an opaque, yellow liquid having a viscosity of about 57,500 $mm^2/s$ (cs.) at 25°C.

About 100 parts of this composition are mixed with 200 parts of water at room temperature for 1 hour. The dispersion is an opaque, white liquid having a viscosity of 25 $mm^2/s$ (cs.) at 25°C. A rubber-like film is formed when the water is removed by evaporation.

Example 4

About 285 parts of the silylated polyether prepared in Example 1(b) above are mixed at 70°C with 15 parts of a silanol terminated dimethylpolysiloxane having a silanol content of about 2.5 percent and a viscosity of about 70 $mm^2/s$ (cs.) at 25°C for 3 hours. The resultant composition is an opaque, yellow liquid with a viscosity of 79,000 $mm^2/s$ (cs.) at 25°C.

About 100 parts of this composition are mixed with 200 parts of water at room temperature for 1 hour. The dispersion is an opaque, yellow liquid having a viscosity of 44.8 $mm^2/s$ (cs.) at 25°C. A rubber-like film is formed upon evaporation of the water.

Example 5

About 135 parts of the silylated polyether prepared in Example 1(b) above are mixed at 70°C with 15 parts of a silanol terminated dimethylpolysiloxane having a viscosity of 20,000 $mm^2/s$ (cs.) at 25°C for 3 hours. The composition thus formed is an opaque, white, viscous liquid which by NMR analysis contains the following groups in the indicated mole ratios:

| | |
|---|---|
| $OC_2H_4$ | 2.45 |
| $OC_3H_6$ | 1.0 |
| $Si(CH_3)_2$ | 0.24 |

About 100 parts of this composition are dispersed in 200 parts of water by mixing at room temperature for 1 hour. The Dispersion is an opaque, yellow liquid with a viscosity of about 40 $mm^2/s$ (cs.) at 25°C. A rubber-like film is formed upon evaporation of the water.

Example 6

About 37.5 parts of the silylated polyether prepared in Example 1(b) above are mixed at 25°C with 112.5. parts of a silanol terminated dimethylpolysiloxane having a viscosity of 20,000 $mm^2/s$ (cs.) at 25°C for 3 hours. The resultant composition is an opaque, white, high viscosity liquid which by NMR analysis contains the following groups in the indicated ratios:

| | |
|---|---|
| $OC_2H_4$ | 2.39 |
| $OC_3H_6$ | 1.0 |
| $Si(CH_3)_2$ | 7.85 |

About 100 parts of this composition are dispersed in 200 parts of water by mixing at room temperature for 1 hour. The dispersion is an opaque, yellow liquid with a viscosity of about 50 $mm^2/s$ (cs.) at 25°C. A sponge-like material is formed upon evaporation of the water.

Example 7

About 15 parts of the silylated polyether prepared in Example 1(b) above are mixed at 25°C with 135 parts of a silanol terminated dimethylpolysiloxane having a viscosity of 20,000 $mm^2/s$ (cs.) at 25°C for 3 hours. The resulting composition is an opaque, white, viscous liquid which by NMR analysis contains the following groups in the indicated ratios:

| | |
|---|---|
| $OC_2H_4$ | 1.91 |
| $OC_3H_6$ | 1.0 |
| $Si(CH_3)_2$ | 22.3 |

Example 8

About 135 parts of the silylated polyether prepared in Example 1(b) above are mixed at 25°C with 15 parts of a silanol terminated dimethylpolysiloxane having a viscosity of 24 $mm^2/s$ (cs.) at 25°C and a hydroxyl content of 5.7 percent for 3 hours. The resultant composition is an opaque, yellow liquid with a viscosity of 8,800 $mm^2/s$ (cs.) at 25°C.

About 100 parts of this composition are dispersed in 200 parts of water by mixing at room temperature for 1 hour. The dispersion is an opaque, white liquid with a viscosity of 23 $mm^2/s$ (cs.) at 25°C. A rubber-like foam is formed upon evaporation of the water.

Example 9

About 540 parts of the silylated polyether prepared in Example 1(b) above are mixed at 25°C with 60 parts of a silanol terminated dimethylpolysiloxane having a viscosity of about 30 $mm^2/s$ (cs.) at 25°C and a hydroxyl content of about 3.5 percent for 3 hours. The resulting copolymer is an opaque, yellow liquid with a viscosity of 13,700 $mm^2/s$ (cs.) at 25°C. NMR analysis of the resultant composition indicated the presence of the following groups in the indicated ratios:

| | |
|---|---|
| $C_2H_4O$ | 2.9 |
| $C_3H_6O$ | 1.0 |
| $Si(CH_3)_2$ | 0.32 |

About 100 parts of this composition are dispersed in 200 parts of water by mixing at room temperature for 1 hour. The dispersion is an opaque, white liquid having a viscosity of about 30 $mm^2/s$ (cs.) at 25°C. Upon evaporation, a product is obtained which is similar to the product of Example 8.

Example 10

About 135 parts of the silylated polyether prepared in Example 1(b) above are mixed with 15 parts of a silanol terminated dimethylpolysiloxane, having an OH content of about 3.8 percent and a viscosity of about 30 $mm^2/s$ (cs.) at 25°C, at a temperature of 70°C for 3 hours. The resultant composition is an opaque, white, viscous liquid which by NMR analysis contains the following groups in the indicated ratios:

| | |
|---|---|
| $C_2H_4O$ | 2.47 |
| $C_3H_6O$ | 1.0 |
| $Si(CH_3)_2$ | 0.25 |

About 100 parts of this composition are mixed with 200 parts of water for 1 hour at room temperature. The dispersion is an opaque, white liquid having a viscosity of 37 $mm^2/s$ (cs.) at 25°C. A product is obtained which is similar to the product obtained from Example 2.

Example 11

About 135 parts of the silylated polyether prepared in Example 1(b) above are mixed with 15 parts of a silanol terminated dimethylpolysiloxane having a hydroxyl content of about 2.9 percent and a viscosity of about 30 $mm^2/s$ (cs.) at 25°C, at a temperature of 25°C for 3 hours. The resultant composition is an opaque, yellow liquid with a viscosity of 16,400 $mm^2/s$ (cs.) at 25°C which by NMR analysis contains the following groups in the indicated ratios:

| | |
|---|---|
| $C_2H_4O$ | 2.59 |
| $C_3H_6O$ | 1.0 |
| $Si(CH_3)_2$ | 0.17 |

About 100 parts of this composition are mixed with 200 parts of water for 1 hour at room temperature. The resultant dispersion is an opaque, white liquid having a viscosity of 48 $mm^2/s$ (cs.) at 25°C. A rubber-like film is obtained when the water is removed by evaporation.

Example 12

About 135 parts of the silylated polyether prepared in Example 1(b) above are mixed with 15 parts of a silanol terminated dimethylpolysiloxane having a viscosity of 500,000 $mm^2/s$ (cs.) at 25°C for 3 hours. The resultant composition is an opaque, yellow, high viscosity fluid which by NMR analysis contains the following groups in the indicated ratios:

| | |
|---|---|
| $C_2H_4O$ | 2.46 |
| $C_3H_6O$ | 1.0 |
| $Si(CH_3)_2$ | 0.19 |

About 100 parts of this composition are mixed with 200 parts of water for 1 hour at room temperature. The resultant composition is an opaque, white liquid having a viscosity of 30 $mm^2/s$ (cs.) at 25°C. A rubber-like foam is obtained when the water is removed by evaporation.

Example 13

(a) A carboxylic acid functional polyether is prepared by mixing about 1200 parts of an oxyethyleneoxypropylene triol described in Example 1(a) with about 88.8 parts of phthalic anhydride and the resultant mixture is heated at about 120°C for eighteen hours. The acid content of the resultant product is found to be about 0.5 milliequivalent of acid per gram.

(b) About 1288.8 parts of the above product are mixed with about 132.6 parts of 3-aminopropyltriethoxysilane. The resultant silylated polyether is a dark-colored liquid with a viscosity of 2,850 $mm^2/s$ (cs.) at 25°C.

(c) About 450 parts of the silylated polyether prepared in (b) above, are mixed with 50 parts of the linear silanol terminated dimethylpolysiloxane described in Example 1(c) above, at 25°C for 3 hours. The resultant composition is an opaque, yellow liquid having a viscosity of 3,580 $mm^2/s$ (cs.) at 25°C.

Example 14

The procedure of Example 13 is repeated, except that the carboxylic acid functional polyether is prepared by substituting 58.8 parts of maleic anhydride containing 0.2 parts para-methoxyphenol for the phthalic anhydride. The resultant composition prepared from the silylated polyether and silanol terminated dimethylpolysiloxane has a viscosity of 137,600 $mm^2/s$ (cs.) at 25°C.

Example 15

(a) A carboxylic acid functional polyether is prepared by refluxing a mixture containing 95 parts of oxyethylene diol having a molecular weight of about 400, 50 parts of xylene and 56.1 parts of succinic acid, until 8.5 parts of water is collected in a Dean Stark head. The xylene is then removed in vacuum up to a temperature of about 100°C.

(b) About 105.5 parts of 3-aminopropyltriethoxysilane are added to the product obtained in (a) above at 40°C. The temperature increased to about 80°C. An opaque, yellow silylated polyether is obtained.

(c) About 180 parts of the silylated polyether prepared in (b) above are then mixed with 20 parts of the silanol terminated polysiloxane described in Example 1(c) for 3 hours at about 25°C. An opaque, yellow composition having a viscosity of 34,500 $mm^2/s$ (cs.) at 25°C is obtained.

Example 16

(a) A silylated polyether is prepared by mixing 1540 parts of oxyethylene diol having a molecular weight of about 1500 with about 108 parts of sodium methoxide and thereafter, the resultant product is vacuum stripped for four hours to remove methanol which is formed as a by-product. The resultant product is cooled to room temperature and about 397 parts of chloropropyltrimethoxysilane are added. The resultant product is heated at about 100°C for 4 hours; then filtered to remove the sodium chloride by-product. The resultant silylated polyether is an opaque, brown wax.

(b) About 180 parts of the silylated polyether prepared in (a) above are mixed with 20 parts of the silanol terminated polysiloxane described in Example 1(c) for one hour at room temperature. An opaque, white wax, which melts at 34° to 38°C is obtained.

Example 17

A water solution of the silylated polyether prepared in Example 1(b) above is prepared by mixing 100 parts of the silylated polyether with 200 parts water for 1 hour at room temperature.

About 85 parts of this solution are mixed with 15 parts of an aqueous emulsion containing 35 percent by weight of a silanol terminated dimethylpolysiloxane having a viscosity of about 70 $mm^2/s$ (cs.) at 25°C for 3 hours at a temperature of 70°C. The resulting dispersion is an opaque, yellow liquid having a viscosity of 54 $mm^2/s$ (cs.) at 25°C.

Example 18

The stability of the water dispersions containing 33 percent by weight of the compositions prepared in the above Examples is determined by 1) heating the various dispersions in a forced air oven at 50°C and monitoring the stability with time and 2) performing consecutive freeze-thaw cycles on the dispersions by cooling to −40°C until frozen and then allowing the dispersions to thaw at room temperature and monitoring the stability after each cycle.

The following table summarizes the results of these tests.

TABLE I

| Example Number | Time at 50°C | Number of Freeze/ Thaw Cycles |
|---|---|---|
| 2 | Greater than 2 months | Greater than 5 |
| 3 | Greater than 2 months | Greater than 3 |
| 4 | Greater than 2 months | Greater than 3 |

Comparison Example $V_1$

About 270 parts of the silylated polyether prepared in Example 1(b) above are mixed with 30 parts of a trimethylsiloxy endblocked dimethylpolysiloxane having a viscosity of 50 $mm^2/s$ (cs.) at 25°C for 3 hours. When the agitation ceased, the mixture immediately separates into 2 phases. About 100 parts of this heterogeneous mixture are dispersed in 200 parts of water by mixing at room temperature for 1 hour. The dispersion is unstable and immediately separates into 2 phases. Upon evaporation of the water, a heterogeneous product is obtained consisting of a friable rubber-like material and an oily liquid.

Comparison Example $V_2$

About 135 parts of the carboxylic acid intermediate, prepared in accordance with Example 1(a) and 15

parts of a silanol terminated dimethylpolysiloxane having an OH content of about 2.5 and a viscosity of 70 $mm^2/s$ (cs.) at 25°C are mixed at a temperature of 25°C for 3 hours. An opaque, yellow liquid, which did not readily phase separate is obtained. About 200 parts of deionized water are added to the mixture and mixed for 1 hour at room temperature. The aqueous dispersion separated into two phases after 3 days.

Example 19

A textile fabric containing a mixture of polyester (Dacron) and cotton (65/35) is treated with the compositions prepared in the above Examples by dipping the fabric in aqueous dispersions containing 2 percent by weight of the various compositions prepared in the respective Examples in which the percent by weight is based on total weight of the solution. The fabric is then dried for two minutes at 171°C (340°F) in a forced air oven. The hand characteristics of each fabric is then rated from 1 to 5, where 5 designates a soft, silky, lubricuous hand and 1 designates a stiff, harsh, boardy hand The following table summarizes the observations:

TABLE II

| Example Number | Hand Rating |
|---|---|
| 1(c) | 5 |
| 3 | 4 |
| 4 | 4 |
| 5 | 3 |
| 8 | 4 |
| 10 | 3 |

Example 20

(a) A textile fabric containing a mixture of polyester (Dacron) and cotton (65/35) is treated with the composition prepared in Example 1(c) by dipping the fabric in aqueous dispersions containing 0.7 percent by weight of the silicone polymer and 1.7 percent by weight of dimethyol dihydroxy ethylene urea in which the percent by weight is based on the total weight of the solution. The fabric is then dried for 2 minutes at 70°C in a forced air oven. A soft, silky hand is obtained which would correspond to a hand characteristic rating of 4.

(b) As a comparison, a textile fabric of polyester and cotton (65/35) is treated in accordance with (a) above with an aqueous solution containing 1.7 percent by weight of dimethyol dihydroxy ethylene urea. A harsh, stiff hand is obtained which would correspond to a hand characteristic rating of 2.

Example 21

(a) About 258.6 parts of a carboxylic acid functional polyether prepared in accordance with Example 1(a) are mixed with 29.8 parts of chloropropyltrimethoxysilane, 15.2 parts of triethylamine and 100 parts of toluene and refluxed for nine hours. A yellow liquid product containing a white solid precipitate is formed. The product is filtered and the white solid precipitate is identified as triethylamine hydrochloride. The liquid product is vacuum stripped (133 Pa = 1 torr) up to about 150°C. A silylated polyether having a viscosity of about 30,000 $mm^2/s$ (cs.) at 25°C is obtained.

(b) About 90 parts of the silylated polyether prepared in (a) above are mixed at 25°C with 10 parts of a linear silanol terminated dimethylpolysiloxane having a silanol content of about 2.5 percent and a viscosity of about 70 $mm^2/s$ (cs.) at 25°C for three hours. The resultant product is an opaque, yellow liquid having a viscosity of about 22,000 $mm^2/s$ (cs.) at 25°C.

A portion of the product is dispersed in water and an emulsion is formed which is stable after 3 months. When the water is evaporated, a rubber-like film is formed.

Example 22

Fabrics, including polyester, cotton, wool, polyamide (nylon) and rayon are treated with the compositions of Examples 1 and 21 in accordance with the procedure described in Example 19. The treated fabrics have a soft, silky, lubricuous hand.

**Claims**

1. A silicon polymer composition for treating textile materials comprising a silanol terminated organopolysiloxane and a silylated polyether of the general formula

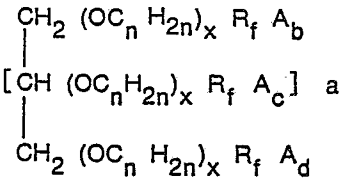

in which at least one R is selected from the group consisting of an —NH radical, an ammonium radical and a radical selected from the group consisting of

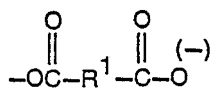 , 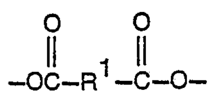 and 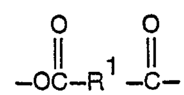

wherein the radicals are linked to the polyether through a group selected from the class consisting of an ester, amine, amide and ammonium radical and the remaining R— groups are selected from the group consisting of hydroxyl, hydrocarbonoxy radicals having up to 18 carbon atoms and a radical of the formula

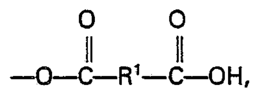

$R^1$ is a divalent hydrocarbon radical having from 1 to 10 carbon atoms, selected from the group consisting of $(—CH_2)_y$, —CH=CH— and a cyclic divalent hydrocarbon radical selected from the group consisting of $C_6H_4$, $C_6H_8$, $C_6H_{10}$ and $C_{10}H_6$; A is a silicon containing radical selected from the group consisting of cationic and anionic radicals of the formula

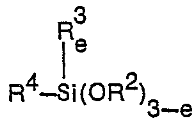 , 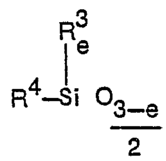

and nonionic radicals of the formula

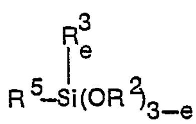 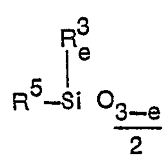 ,

in which $R^2$ and $R^3$ which may be the same or different, are monovalent hydrocarbon radicals having from 1 to 18 carbon atoms, $R^4$ is an ionic radical linked to a silicon atom and consisting of carbon, hydrogen, oxygen and nitrogen atoms which is selected from the group consisting of

$\overset{(+)}{NH_3}-R^6-$ , $\overset{(+)}{NH_3}-R^6-NH-R^6-$ , $\overset{(+)}{NH_3}-R^6-\overset{(+)}{NH_2}-R^6-$ , 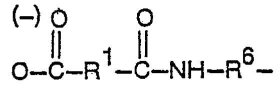 ,

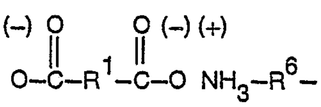 , 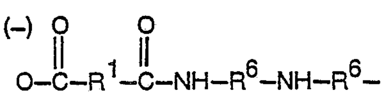 and

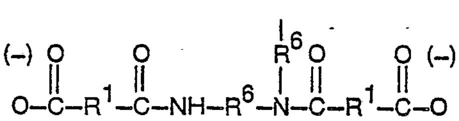

$R^5$ is a nonionic divalent radical selected from the group consisting of $R^6$ and a radical consisting of carbon, hydrogen, oxygen and nitrogen atoms which is selected from the group consisting of

$-NH-R^6-$ , $-NH-R^6-NH-R^6-$ , 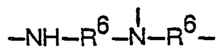 , 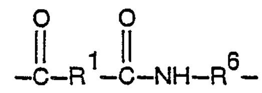 ,

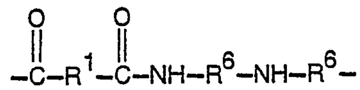 and 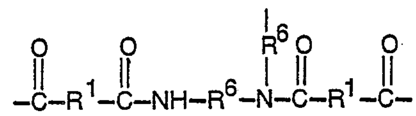

with the proviso that when R is the radical

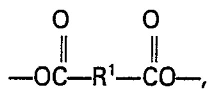

then $R^5$ must be $R^6$,

$R^6$ is a radical having from 1 to 50 carbon atoms selected from the group consisting of a saturated divalent hydrocarbon radical, a divalent hydrocarbonoxy radical in which the oxygen is in the form of an ether linkage and an unsaturated divalent hydrocarbon radical in which the unsatisfied valences of the $R^6$ radical are linked to a silicon atom and the unsatisfied valences of A are satisfied by R and when A is a divalent radical, the ratio of A to R is 1:2 and when R is cationic, then A must be anionic and when R is anionic, then A must be cationic and when R is nonionic, then A must be nonionic, *a* is a number of from 0 to 4, *b, c* and *d* are each numbers of from 0 to 1 and the *sum of b, c and d* must be at least 1 and when *b, c* or *d* are 0, then R is selected from the group consisting of a hydroxyl, a hydrocarbonoxy radical and a radical of the formula

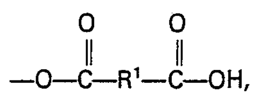

*e* is a number of 0 to 2, *f* is 0 or 1, *n* is 2, 3 or 4, *x* is a number of at least 1 and up to 600 and *y* is a number of from 0 to 10.

2. The composition of claim 1, wherein A in the silylated polyethers is an ionic silicon containing radical of the formula

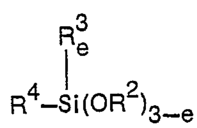

or of the formula

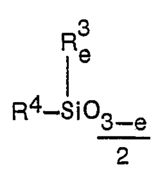

in which $R^2$ and $R^3$ are each monovalent hydrocarbon radicals having from 1 to 18 carbon atoms, $R^4$ is an ionic radical linked to a silicon atom and consisting of carbon, hydrogen, oxygen and nitrogen atoms which are selected from

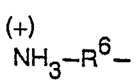 , 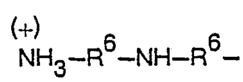 , 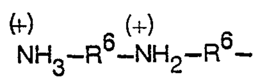 , 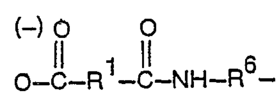 ,

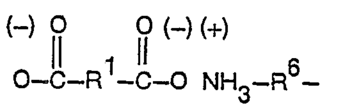 , 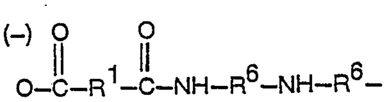 and

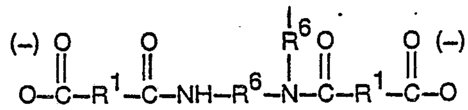

and e is a number of from 0 to 2.

3. The composition of claim 1, wherein A in the silylated polyethers is a nonionic silicon containing radical of the formula

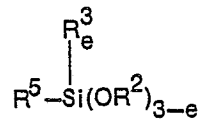

or of the formula

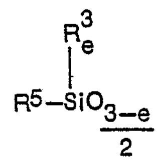

in which $R^2$ and $R^3$ are each monovalent hydrocarbon radicals having from 1 to 18 carbon atoms, $R^5$ is a nonionic divalent radical selected from the group consisting of $R^6$ and a radical consisting of carbon, hydrogen, oxygen and nitrogen atoms which is selected from the group consisting of

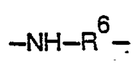 , 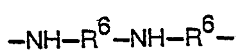 , 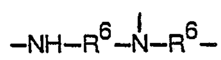 , 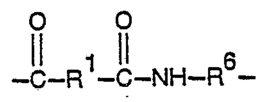 ,

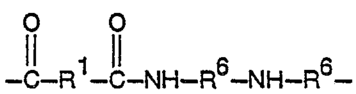 and 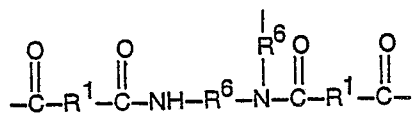

with the proviso that when R is the radical

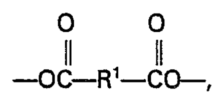

then $R^5$ must be $R^6$,

$R^6$ is a radical from 1 to 50 carbon atoms selected from the group consisting of a saturated divalent hydrocarbon radical, a divalent hydrocarbonoxy radical in which the oxygen is in the form of an ether linkage and an unsaturated divalent hydrocarbon radical and e is a number of from 0 to 2.

4. The composition of claim 1, wherein the silanol-terminated organopolysiloxane is present in an amount of from 0.25 to 99.75 percent by weight and the silylated polyether is present in an amount of from 99.75 to 0.25 percent by weight based on the weight of the silanol terminated organopolysiloxane and the silylated polyether.

5. The composition of claim 1, wherein the silanol terminated organopolysiloxane is a silanol terminated diorganopolysiloxane having a viscosity of from 15 to 1,000,000 $mm^2/s$ (cs.) at 25°C.

6. A process for preparing a composition for treating textile materials which comprises reacting a silanol terminated organopolysiloxane with a silylated polyether having the general formula

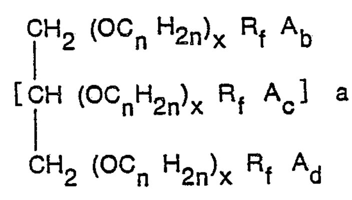

in which at least one R is selected from the group consisting of an —NH radical, an ammonium radical and a radical selected from the group consisting of

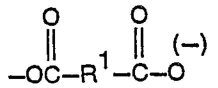 , 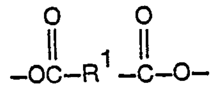 and 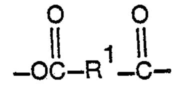

wherein the radicals are linked to the polyether through a group selected from the class consisting of an ester, amine, amide and ammonium radical and the remaining R— groups are selected from the group consisting of hydroxyl, hydrocarbonoxy radicals having up to 18 carbon atoms and a radical of the formula

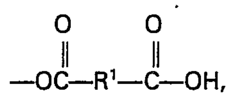

$R^1$ is a divalent hydrocarbon radical having from 1 to 10 carbon atoms, selected from the group consisting of $(—CH_2)_y$, —CH=CH— and a cyclic divalent hydrocarbon radical selected from the group consisting of $C_6H_4$, $C_6H_8$, $C_6H_{10}$ and $C_{10}H_6$; A is a silicon containing radical selected from the group consisting of cationic and anionic radicals of the formula

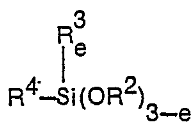 , 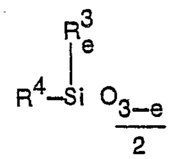

and nonionic radicals of the formula

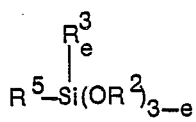 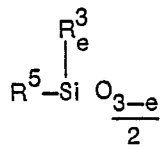 ,

in which $R^2$ and $R^3$ which may be the same or different, are monovalent hydrocarbon radicals having from 1 to 18 carbon atoms, $R^4$ is an ionic radical linked to a silicon atom and consisting of carbon, hydrogen, oxygen and nitrogen atoms which is selected from the group consisting of

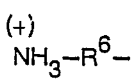 , 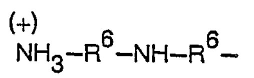 , 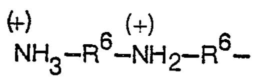 , 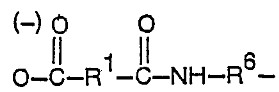 ,

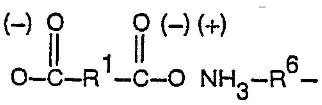 , 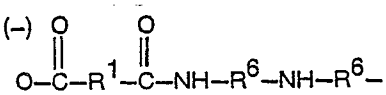 and

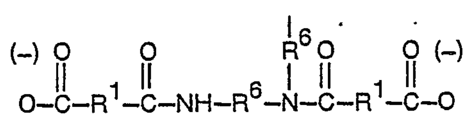

$R^5$ is a nonionic divalent radical selected from the group consisting of $R^6$ and a radical consisting of carbon, hydrogen, oxygen and nitrogen atoms which is selected from the group consisting of

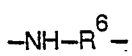 , 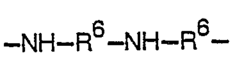 , 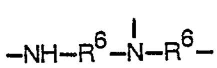 , 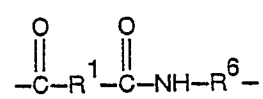 ,

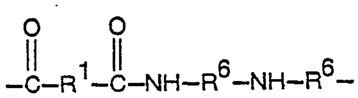 and 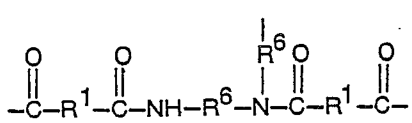

with the proviso that when R is the radical

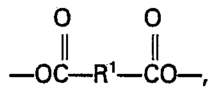

then $R^5$ must be $R^6$,

$R^6$ is a radical having from 1 to 50 carbon atoms selected from the group consisting of a saturated divalent hydrocarbon radical, a divalent hydrocarbonoxy radical in which the oxygen is in the form of an ether linkage and an unsaturated divalent hydrocarbon radical in which the unsatisfied valences of the $R^6$ radical are linked to a silicon atom and the unsatisfied valences of A are satisfied by R and when A is a divalent radical, the ratio of A to R is 1:2 and when R is cationic, then A must be anionic and when R is anionic, then A must be cationic and when R is nonionic, then A must be nonionic, *a* is a number of from 0 to 4, *b, c* and *d* are each numbers of from 0 to 1 and the *sum of b, c and d* must be at least 1 and when *b, c* or *d* are 0, then R is selected from the group consisting of a hydroxyl, a hydrocarbonoxy radical of the formula

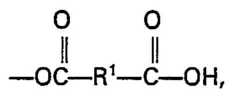

*e* is a number of 0 to 2, *f* is 0 or 1, *n* is 2, 3 or 4, *x* is a number of at least 1 and up to 600 and *y* is a number of from 0 to 10.

7. The process of claim 6, wherein the silanol terminated organopolysiloxane and the silylated polyether are heated to an elevated temperature.

8. The composition obtained from the process of claim 7, for treating textile materials.

9. A process for treating a textile material which comprises coating a textile material with the composition of claim 1, which is dissolved in a diluent to form a solution containing from 0.25 to 99.75 parts by weight of the composition and 99.75 to 0.25 parts by weight of diluent and thereafter curing the coated material at an elevated temperature.

10. The coated textile material which has been treated in accordance with the process of claim 9.

**Patentansprüche**

1. Organopolysiloxanzusammensetzung zur Behandlung von Textilien enthaltend ein endständige Silanolgruppen aufweisendes Organopolysiloxan und einen silylierten Polyether der allgemeinen Formel

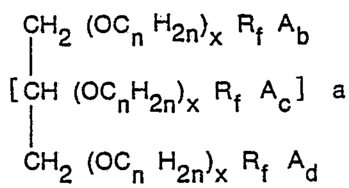

worin mindestens einer der Reste R ein —NH-Rest, ein Ammoniumrest oder ein Rest der Formeln

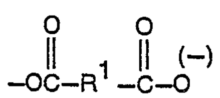 , 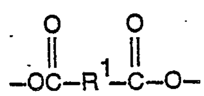 oder 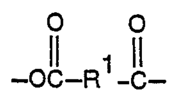

ist, die mit dem Polyether durch eine Ester-, Amino-, Amido- oder Ammoniumgruppe verbunden sind und die verbleibenden Reste R Hydroxyl-, Kohlenwasserstoffoxyreste mit bis zu 18 C-Atomen oder Reste der Formel

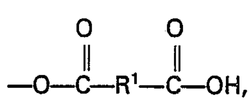

sind, wobei $R^1$ ein zweiwertiger Kohlenwasserstoffrest mit 1 bis 10 C-Atomen aus der Gruppe $(—CH_2)_y$ und —CH=CH— oder ein cyclischer zweiwertiger Kohlenwasserstoffrest aus der Gruppe $C_6H_4$, $C_6H_8$, $C_6H_{10}$ und $C_{10}H_6$ ist, A ein Silicium — enthaltender Rest aus der Gruppe der kationischen und anionischen Reste der Formeln

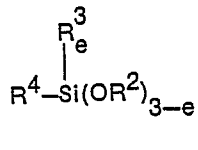 , 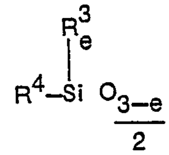

und der nichtionischen Reste der Formeln

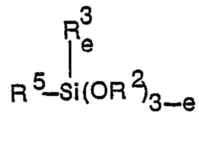 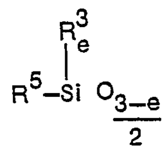

ist, worin $R^2$ und $R^3$, die gleich oder verschieden sein können, einwertige Kohlenwasserstoffreste mit 1—18 C-Atomen, $R^4$ ein mit dem Si-Atom verbundener ionischer Rest, bestehend aus Kohlenstoff-, Wasserstoff-, Sauerstoff- und Stickstoffatomen, aus der Gruppe

$\overset{(+)}{NH_3}-R^6-$ , $\overset{(+)}{NH_3}-R^6-NH-R^6-$ , $\overset{(+)}{NH_3}-R^6-\overset{(+)}{NH_2}-R^6-$ , 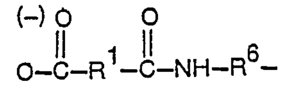 ,

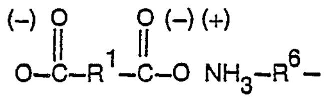 , 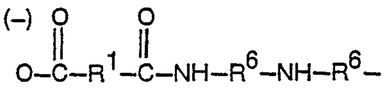 und

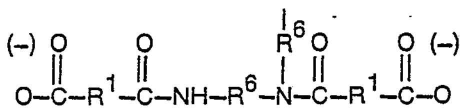

$R^5$ ein nichtionischer, zweiwertiger Rest aus der Gruppe $R^6$ und einem Rest bestehend aus Kohlenstoff-, Wasserstoff-, Sauerstoff- und Stickstoffatomen ausgewählt aus

$-NH-R^6-$ , $-NH-R^6-NH-R^6-$ , 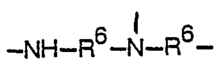 , 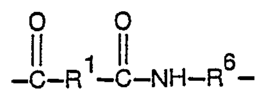 ,

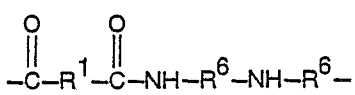 und 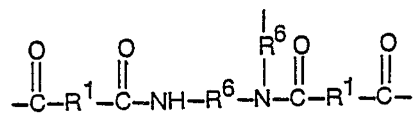

mit der Maßgabe, daß, wenn R der Rest

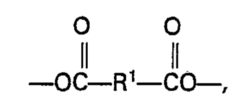

ist, $R^5$ gleich $R^6$ sein muß,

$R^6$ ein Rest mit 1 bis 50 C-Atomen aus der Gruppe der gesättigten, zweiwertigen Kohlenwasserstoffreste, zweiwertigen Kohlenwasserstoffoxyreste, worin der Sauerstoff in Form einer Etherbindung vorliegt, und ungesättigten, zweiwertigen Kohlenwasserstoffreste ist, wobei die freien Valenzen des $R^6$-Restes mit einem Si-Atom verknüpft und die freien Valenzen des Restes A mit R abgesättigt sind, wenn A ein zweiwertiger Rest ist, das Verhältnis von A zu R 1:2 beträgt und wenn R kationisch ist, A anionisch sein muß, wenn R anionisch ist, A kationisch sein muß und wenn R nichtionisch ist, A nichtionisch sein muß, *a* eine Zahl von 0 bis 4 ist, *b*, *c* und *d* jeweils Zahlen von 0 bis 1 sind und die Summe von *b*, *c* und *d* mindestens 1 sein muß und wenn *b*, *c* oder *d* 0 sind, dann R ein Hydroxyl-, Kohlenwasserstoffoxyrest oder ein Rest der Formel

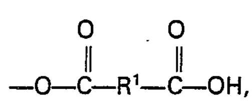

ist, *e* eine Zahl von 0 bis 2 ist, *f* ist 0 oder 1, *n* ist 2, 3 oder 4, *x* eine Zahl von mindestens 1 und bis zu 600 und *y* eine Zahl von 0 bis 10 ist.

2. Zusammensetzung gemäss Anspruch 1, worin A in dem silylierten Polyether ein ionischer, Silicium enthaltender Rest der Formel

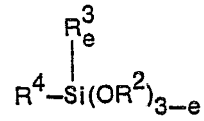

oder der Formel

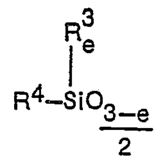

ist, wobei $R^2$ und $R^3$ jeweils einwertige Kohlenwasserstoffreste mit 1 bis 18 Kohlenstoffatomen sind, $R^4$ ein mit dem Si-Atom verbundener ionischer Rest, bestehend aus Kohlenstoff-, Wasserstoff-, Sauerstoff- und Stickstoffatomen, ausgewählt aus

$\overset{(+)}{N}H_3-R^6-$ , $\overset{(+)}{N}H_3-R^6-NH-R^6-$ , $\overset{(+)}{N}H_3-R^6-\overset{(+)}{N}H_2-R^6-$ , 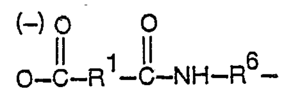 ,

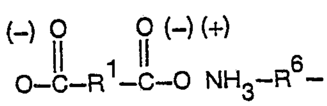 , 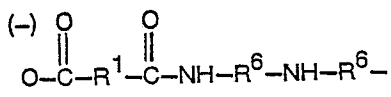 und

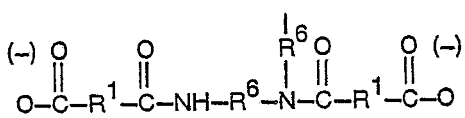

und *e* eine Zahl von 0 bis 2 ist.

3. Zusammensetzung gemäss Anspruch 1, worin A in dem silylierten Polyether ein nichtionischer, Silicium enthaltender Rest der Formel

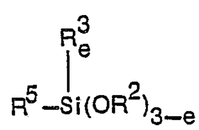

oder der Formel

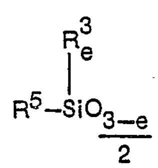

ist, wobei $R^2$ und $R^3$ jeweils einwertige Kohlenwasserstoffreste mit 1 bis 18 Kohlenstoffatomen sind, $R^5$ ein nichtionischer zweiwertiger Rest aus der Gruppe $R^6$ und einem Rest bestehend aus Kohlenstoff-, Wasserstoff-, Sauerstoff- und Stickstoffatomen ausgewählt aus

$-NH-R^6-$ , $-NH-R^6-NH-R^6-$ , 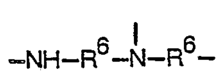 , 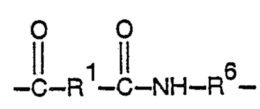 ,

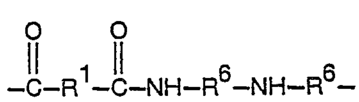 und 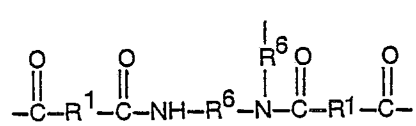

mit der Maßgabe, daß, wenn R der Rest der Formel

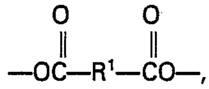

ist, $R^5$ gleich $R^6$ sein muß,

$R^6$ ein Rest mit 1 bis 50 Kohlenstoffatomen aus der Gruppe der gesättigten zweiwertigen Kohlenwasserstoffreste, zweiwertigen Kohlenwasserstoffoxyreste, worin der Sauerstoff in Form einer Etherbindung vorliegt, und ungesättigten zweiwertigen Kohlenwasserstoffresten und *e* eine ganze Zahl von 0 bis 2 ist.

4. Zusammensetzung gemäss Anspruch 1, worin das endständige Silanolgruppen aufweisende Organopolysiloxan in Mengen von 0.25 bis 99.75 Gewichtsprozent und der silylierte Polyether in Mengen von 99.75 bis 0.25 Gewichtsprozent vorhanden sind, jeweils bezogen auf das Gewicht des endständige Silanolgruppen aufweisenden Organopolysiloxans und des silylierten Polyethers.

5. Zusammensetzung gemäss Anspruch 1, worin das endständige Silanolgruppen aufweisende Organopolysiloxan ein endständige Silanolgruppen aufweisendes Diorganopolysiloxan einer Viskosität von 15 bis 1 000 000 $mm^2/s$ (cs.) bei 25°C ist.

6. Verfahren zur Herstellung einer Zusammensetzung zur Behandlung von Textilien, dadurch gekennzeichnet, daß ein endständige Silanolgruppen aufweisendes Organopolysiloxan mit einem silylierten Polyether der allgemeinen Formel

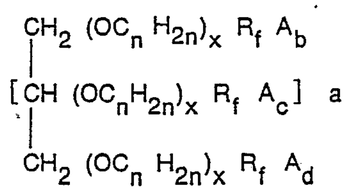

worin mindestens einer der Reste R ein —NH-Rest, ein Ammoniumrest oder ein Rest der Formeln

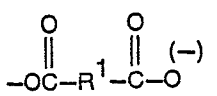 , 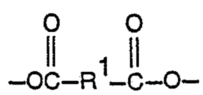 oder 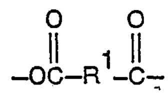

ist, die mit dem Polyether durch eine Ester-, Amino-, Amido- oder Ammoniumgruppe verbunden sind und die verbleibenden Reste R Hydroxyl-, Kohlenwasserstoffoxyreste mit bis zu 18 Kohlenstoffatomen oder Reste der Formel

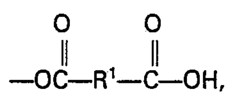

sind, wobei $R^1$ ein zweiwertiger Kohlenwasserstoffrest mit 1 bis 10 Kohlenstoffatomen aus der Gruppe $(-CH_2)_y$ und —CH=CH— oder ein cyclischer zweiwertiger Kohlenwasserstoffrest aus der Gruppe $C_6H_4$, $C_6H_8$, $C_6H_{10}$ und $C_{10}H_6$ ist, A ist ein Silicium enthaltender Rest aus der Gruppe der kationischen und anionischen Reste der Formeln

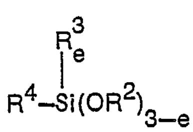 , 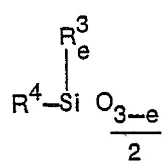

und der nichtionischen Reste der Formeln

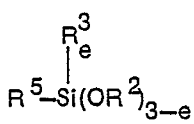 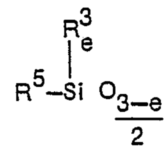 ,

worin $R^2$ und $R^3$, die gleich oder verschieden sein können, einwertige Kohlenwasserstoffreste mit 1 bis 18 Kohlenstoffatomen sind und $R^4$ ein mit dem Si-Atom verbundener ionischer Rest bestehend aus Kohlenstoff-, Wasserstoff-, Sauerstoff- und Stickstoffatomen aus der Gruppe

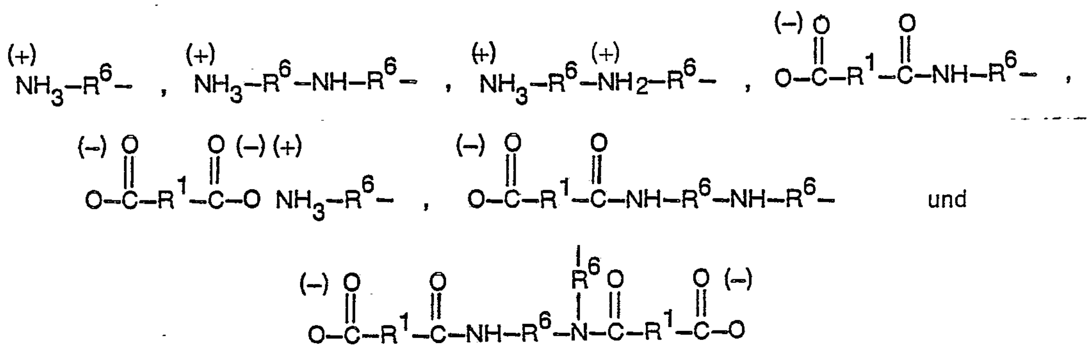

und

$R^5$ ein nichtionischer zweiwertiger Rest aus der Gruppe $R^6$ und einem Rest bestehend aus Kohlenstoff-, Wasserstoff-, Sauerstoff- und Stickstoffatomen, ausgewählt aus

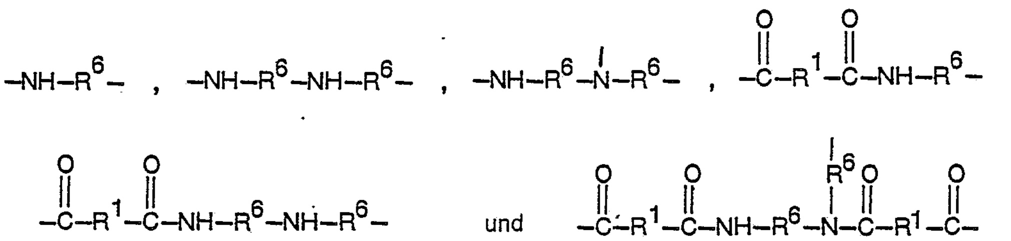

und

mit der Maßgabe, daß, wenn R der Rest der Formel

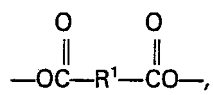

ist, $R^5$ gleich $R^6$ sein muß,

$R^6$ ein Rest mit 1 bis 50 C-Atomen aus der Gruppe der gesättigten, zweiwertigen Kohlenwasserstoffreste, zweiwertigen Kohlenwasserstoffoxyreste, worin der Sauerstoff in Form einer Etherbindung vorliegt, und ungesättigten, zweiwertigen Reste ist, wobei die freien Valenzen des $R^6$-Restes mit einem Si-Atom verknüpft und die freien Valenzen des Restes A mit R abgesättigt sind, wenn A ein zweiwertiger Rest ist, das Verhältnis von A zu R 1:2 beträgt und wenn R kationisch ist, A anionisch sein muß, wenn R anionisch ist, A kationisch sein muß und wenn R nichtionisch ist, A nichtionisch sein muß, *a* eine Zahl von 0 bis 4 ist, *b, c* und *d* jeweils Zahlen von 0 bis 1 sind und die Summe von *b, c* und *d* mindestens 1 sein muß und wenn *b, c* oder *d* 0 sind, dann R ein Hydroxyl-, Kohlenwasserstoffoxyrest oder ein Rest der Formel

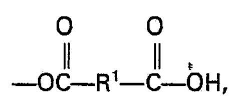

ist, *e* eine Zahl von 0 bis 2 ist, *f* ist 0 oder 1, *n* ist 2, 3 oder 4, *x* eine Zahl von mindestens 1 und bis zu 600 und *y* eine Zahl von 0 bis 10 ist, umgesetzt wird.

7. Verfahren nach Anspruch 6, dadurch gekennzeichnet, daß das endständige Silanolgruppen aufweisende Organopolysiloxan und der silylierte Polyether auf eine erhöhte Temperatur erhitzt werden.

8. Verwendung der nach Anspruch 7 hergestellten Zusammensetzung zum Behandeln von Textilien.

9. Verfahren zum Behandeln von Textilien, dadurch gekennzeichnet, daß das Textilmaterial mit der Zusammensetzung gemäss Anspruch 1, die in einem Verdünnungsmittel gelöst ist, wobei die Lösung von 0,25 bis 99,75 Gewichtsprozent der Zusammensetzung und von 99,75 bis 0,25 Gewichtsprozent an Verdünnungsmittel enthält, beschichtet und anschließend das beschichtete Material bei erhöhter Temperatur ausgehärtet wird.

10. Beschichtetes textiles Material, das gemäss dem Verfahren nach Anspruch 9 behandelt worden ist.

**Revendications**

1. Compositions de polymères siliconiques pour le traitement de matières textiles, comprenant un polyorganosiloxane à terminaisons silanoliques et un polyéther silylé de formule générale

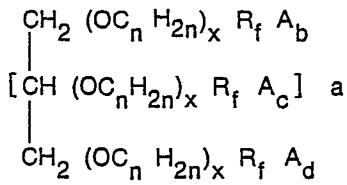

dans laquelle l'un au moins des R est choisi parmi le radical —NH, un radical ammonium et les radicaux

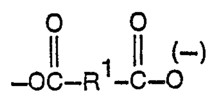 , 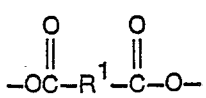 et 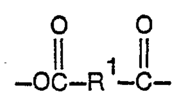

radicaux qui sont liés au polyéther par un groupe ester, amine, amide ou ammonium, et les autres groupes R sont choisis parmi le groupe hydroxyle, des radicaux hydrocarbyloxy pouvant avoir jusqu'à 18 atomes de carbone et un radical

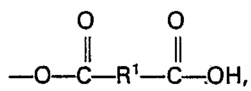

$R^1$ est un radical hydrocarboné divalent en $C_1$ à $C_{10}$ choisi parmi les groupes $(—CH_2)_y$, —CH=CH— et un radical hydrocarboné cyclique divalent choisi parmi les groupes $C_6H_4$, $C_6H_8$, $C_6H_{10}$ et $C_{10}H_6$; A est radical silicié choisi parmi des radicaux cationiques ou anioniques de formules

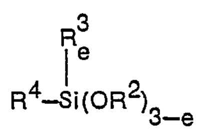 , 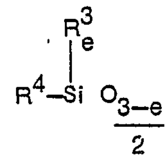

et des radicaux non ioniques de formules

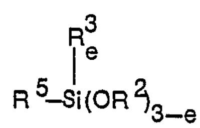 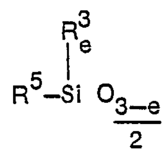 ,

formules dans lesquelles $R^2$ et $R^3$, qui peuvent être indentiques ou différents l'un de l'autre, sont des radicaux hydrocarbonés monovalents $C_1$ à $C_{18}$, $R^4$ est un radical ionique lié à un atome de silicium, formé d'atomes de carbone, d'hydrogène, d'oxygène et d'azote, choisi parmi les suivants

$\overset{(+)}{NH_3}-R^6-$ , $\overset{(+)}{NH_3}-R^6-NH-R^6-$ , $\overset{(+)}{NH_3}-R^6-\overset{(+)}{NH_2}-R^6-$ 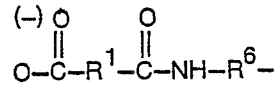 ,

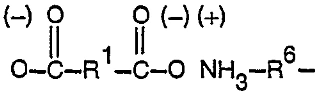 , 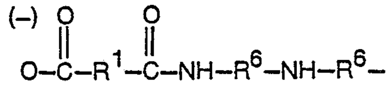 et

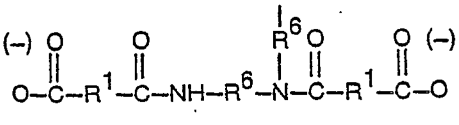

$R^5$ est un radical divalent non ionique choisi parmi $R^6$ et un radical formé d'atomes de carbone, hydrogène, d'oxygène et d'azote, choisi parmi les suivants

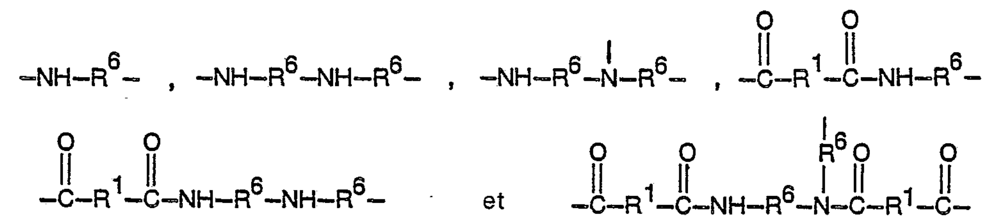

avec la condition que si R est un radical

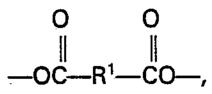

$R^5$ doit être un radical $R^6$,

$R^6$ est un radical en $C_1$ à $C_{50}$ choisi parmi un radical hydrocarboné divalent saturé, un radical hydrocarbyloxy divalent dont l'oxygène est en liaison éther et un radical hydrocarboné divalent insaturé, les valences insatisfaites de $R^6$ étant liées à un atome de silicium et les valences insatisfaites de A sont satisfaites par R, et si A est un radical divalent, le rapport de A à R est 1:2, si R est cationique, A doit être anionique tandis que si R est anionique A doit être cationique, et si R est non ionique, A doit être non ionique, a est un nombre de 0 à 4, b, c et d sont chacun un nombre de 0 à 1 et la somme b + c + d doit être au moins égale à 1, et si b, c ou d est le nombre 0, R est un radical hydroxyle, hydrocarbyloxy ou un radical de formule

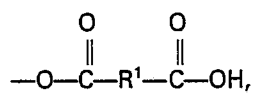

e est un nombre de 0 à 2, f le nombre 0 ou 1, n le nombre 2, 3 ou 4, x un nombre au moins égal à 1 et pouvant s'élever jusqu'à 600 et y un nombre de 0 à 10.

2. Composition selon la revendication 1 dans laquelle le radical A du polyéther silylé est un radical ionique contenant du silicium, de formule

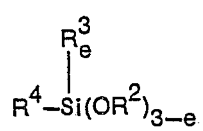

ou

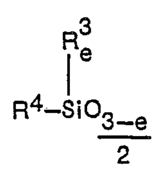

dans lesquelles $R^2$ et $R^3$ sont des radicaux hydrocarbonés monovalents en $C_1$ à $C_{18}$, $R^4$ est un radical ionique lié à un atome de silicium, formé d'atomes de carbone, d'hydrogène, d'oxygène, et d'azote, choisi parmi les suivants

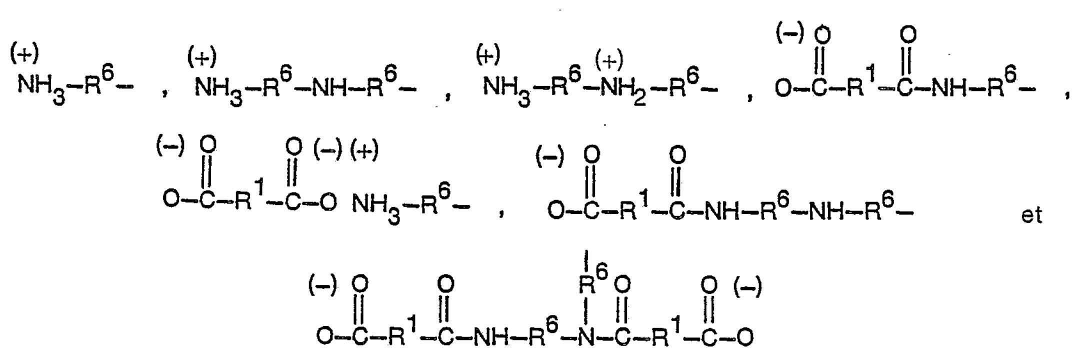

et

et e est un nombre de 0 à 2.

3. Composition selon la revendication 1 dans laquelle le radical A du polyéther silylé est un radical non ionique contenant du silicium et, de formule

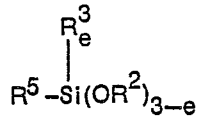

ou

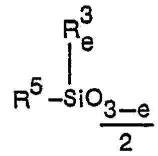

dans lesquelles $R^2$ et $R^3$ sont des radicaux hydrocarbonés monovalents $C^1$ à $C^{18}$, $R^5$ est un radical divalent non ionique choisi parmi $R^6$ et un radical formé d'atomes de carbone, d'hydrogène, d'oxygène et d'azote, choisi parmi les suivants

$-NH-R^6-$ , $-NH-R^6-NH-R^6-$ , 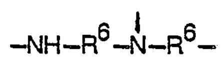 , 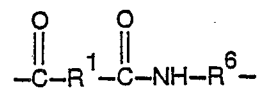 ,

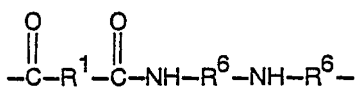 et 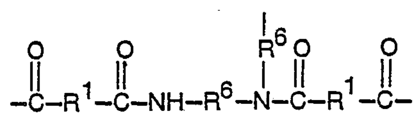

avec la condition que si R est un radical

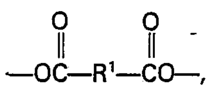

$R^5$ doit être un radical $R^6$,

$R^6$ est un radical en $C_1$ à $C_{50}$ choisi parmi un radical hydrocarboné divalent saturé, un radical hydrocarbyloxy divalent dont l'oxygène est en liaison éther et un radical hydrocarboné divalent insaturé, et e est un nombre de 0 à 2.

4. Composition selon la revendication 1 dans laquelle la proportion du polyorganosiloxane à terminaisons silanoliques est de 0,25 à 99,75% en poids et celle du polyéther silylé de 99,75 à 0,25% en poids, par rapport à la somme des deux.

5. Composition selon la revendication 1 dans laquelle le polyorganosiloxane à terminaisons silanoliques est un polydiorganosiloxane à terminaisons silanoliques ayant une viscosité de 15 à 1 000 000 $mm^2/s$ (cs.) à 25°C.

6. Un procédé de préparation d'une composition pour le traitement de matières textiles, procédé selon lequel on fait réagir un polyorganosiloxane à terminaisons silanoliques avec un polyéther silylé de formule générale

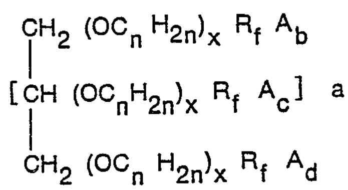

dans laquelle l'un au moins des R est choisi parmi le radical —NH, un radical ammonium et les radicaux

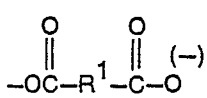 , 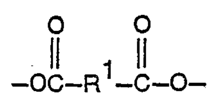 et 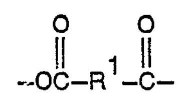

radicaux qui sont liés au polyéther par un groupe ester, amine, amide ou ammonium, et les autres groupes R sont choisis parmi le groupe hydroxyle, des radicaux hydrocarbyloxy pouvant avoir jusqu'à 18 atomes de carbone et un radical

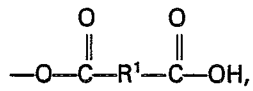

$R^1$ est un radical hydrocarboné divalent en $C_1$ à $C_{10}$ choisi parmi les groupes $(-CH_2)_y$, $-CH=CH-$ et un radical hydrocarboné cyclique divalent choisi parmi les groupes $C_6H_4$, $C_6H_8$, $C_6H_{10}$, et $C_{10}H_6$; A est un radical silicié choisi parmi des radicaux cationiques ou anioniques de formules

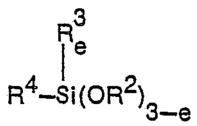 , 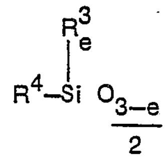

et de radicaux non ioniques de formules

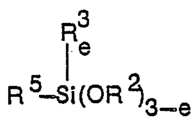 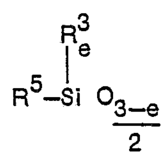 ,

formules dans lesquelles $R^2$ et $R^3$, qui peuvent être identiques ou différents l'un de l'autre, sont des radicaux hydrocarbonés monovalents $C_1$ à $C_{18}$, $R^4$ est un radical ionique lié à un atome de silicium, formé d'atomes de carbone, d'hydrogène, d'oxygène et d'azote, choisi parmi les suivants

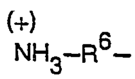 , 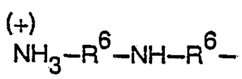 , 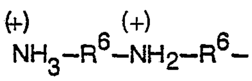 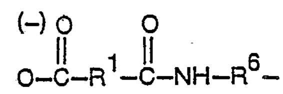 ,

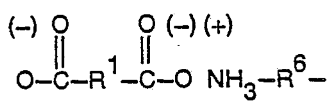 , 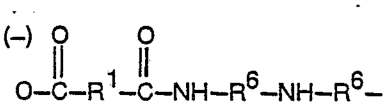 et

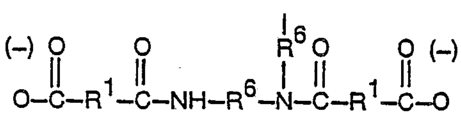

$R^5$ est un radical divalent non ionique choisi parmi $R^6$ et un radical formé d'atomes de carbone, d'hydrogène, d'oxygène et d'azote, choisi parmi les suivants.

$-NH-R^6-$ , $-NH-R^6-NH-R^6-$ , 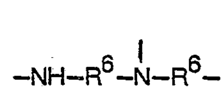 , 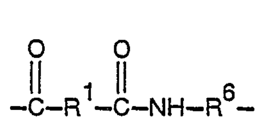 ,

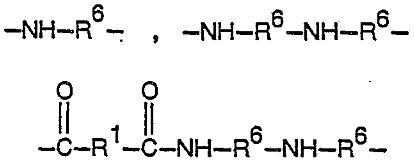 et 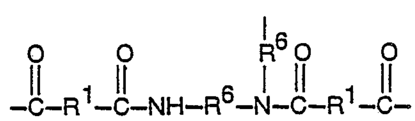

avec la condition que si R est un radical

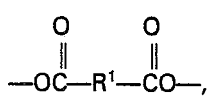

$R^5$ doit être un radical $R^6$,

$R^6$ est un radical en $C_1$ à $C_{50}$ choisi parmi un radical hydrocarboné divalent saturé, un radical hydrocarbyloxy divalent dont l'oxygène est en liaison éther et un radical hydrocarboné divalent insaturé,

les valences insatisfaites de $R^6$ étant liées à un atome de silicium et les valences insatisfaites de A sont satisfaites par R, et si A est un radical divalent, le rapport de A à R est 1:2, si R est cationique, A doit être anionique tandis que si R est anionique A doit être cationique, et si R est non ionique, A doit être non ionique, a est un nombre de 0 à 4, b, c et d sont chacun un nombre de 0 à 1 et la somme b + c + d doit être au moins égale à 1, et si b, c ou d est le nombre 0, R est un radical hydroxyle, hydrocarbyloxy ou un radical de formule

$$-O-\overset{\overset{\displaystyle O}{\|}}{C}-R^1-\overset{\overset{\displaystyle O}{\|}}{C}-OH,$$

e est le nombre de 0 à 2, f le nombre 0 ou 1, n le nombre 2, 3 ou 4, x est un nombre au moins égal à 1 et pouvant s'élever jusqu'à 600 et y un nombre de 0 à 10.

7. Procédé selon la revendication 6, dans lequel on chauffe à une température élevée le polyorganosiloxane à terminaisons silanoliques avec le polyéther silylé.

8. Composition obtenue par le procédé de la revendication 7 pour le traitement de matières textiles.

9. Un procédé de traitement de matières textiles selon lequel on recouvre le textile avec une composition selon la revendication 1 en solution dans un diluant contenant 0,25 à 99,75 parties en poids de la composition pour 99,75 à 0,25 partie en poids du diluant, puis on durcit le textile revêtu à chaud.

10. Matière textile revêtue qui a été traitée par le procédé de la revendication 9.